## Europäisches Patentamt
## European Patent Office
## Office européen des brevets

(11) Numéro de publication: **0 037 557**
**B1**

(12) **FASCICULE DE BREVET EUROPEEN**

(45) Date de publication du fascicule du brevet: **19.06.85**

(21) Numéro de dépôt: **81102453.8**

(22) Date de dépôt: **01.04.81**

(51) Int. Cl.⁴: **B 60 K 41/06, F 16 H 5/66**

(54) Commande électronique pour transmission automatique de véhicule automobile utilisant un microcalculateur.

(30) Priorité: **03.04.80 FR 8007584**

(43) Date de publication de la demande:
**14.10.81 Bulletin 81/41**

(45) Mention de la délivrance du brevet:
**19.06.85 Bulletin 85/25**

(84) Etats contractants désignés:
**BE DE GB IT NL SE**

(56) Documents cités:
**EP-A-0 006 033**
**DE-A-2 812 742**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Pannier, Gérard**
**18, rue Laennec**
**F-78390 Bois-d'Arcy (FR)**
Inventeur: **Roumy, Jean-Claude**
**11, rue de Bel Air**
**F-78210 St. Cyr l'Ecole (FR)**

(74) Mandataire: **Casalonga, Axel et al**
**BUREAU D.A. CASALONGA OFFICE JOSSE & PETIT Baaderstrasse 12-14**
**D-8000 München 5 (DE)**

Courier Press, Leamington Spa, England.

## Description

La présente invention se rapporte à une commande électronique des changements de rapport de vitesses pour transmission automatique de véhicule automobile incluant des électrovannes de commande des changements de rapport placées sous la dépendance de ladite commande électronique.

On connaît déjà, notamment par le document EP—A—6033 qui correspond au préambule de la revendication 1, de la présente demande une commande électronique des changements de rapport de vitesses pour transmission automatique de véhicule automobile incluant des électrovannes de commande des changements de rapport placées sous la dépendance de ladite commande électronique. La commande comprend un micro-calculateur gouvernant sélectivement l'alimentation desdites électrovannes par l'intermédiaire d'amplificateurs de puissance.

En matière de commande électronique d'une transmission automatique, il est connu, notamment d'après le brevet US 4.034.627, de choisir une commande hydraulique telle que le rapport le plus élevé de la transmission (troisième) corresponde à la non alimentation de toutes les électrovannes. Ceci permet d'éviter un freinage brutal et dangereux du véhicule en cas d'interruption complète de l'alimentation électrique.

Il est également connu, d'après le brevet DE 2.812.742, d'utiliser des capteurs de défauts qui agissent, en cas de défaillance quelconque, pour placer la transmission dans une position de sécurité. Mais dans ce cas la position de sécurité choisie est la mise au point mort et non le plus haut rapport. Ce même document prévoit également un dispositif de mémoire pour maintenir la transmission au point mort, même après interruption du défaut si celui-ci est de courte durée.

Cependant dans ce dispositif antérieur le défaut pris en compte ne peut pas être la panne d'alimentation électrique, puisque dans un tel cas ni la mémoire, ni la sélection du point mort ne fonctionne.

L'invention se propose de n'utiliser qu'un nombre minimum d'électrovannes, soit deux pour 3 rapports, en employant la technique du brevet US sus mentionné.

Naturellement la transmission utilisée comporte de manière usuelle un point mort, une marche arrière et une position de parking, mais par commande manuelle directe et non par commande automatique.

Cependant, alors que ce document se soucie essentiellement de la sécurité en cas d'interruption complète de l'alimentation électrique, la présente invention s'impose comme but d'aller plus loin en ce souciant de cette sécurité en cas de rétablissement de l'alimentation électrique après une interruption assez courte pour que le véhicule soit encore en pleine vitesse. En effet une chute momentanée de tension est fréquente sur les véhicules modernes en raison du nombre croissant des auxiliaires électriques et de la puissance toujours limitée de l'alimentation (alternateur et accumulateur).

Pour cela, l'invention prévoit de réaliser une commande électronique des changements de rapport de vitesses d'une transmission automatique de véhicule automobile incluant des électrovannes de commande des changements de rapport placées sous la dépendance de ladite commande électronique, cette dernière comprenant essentiellement un microprocesseur qui est raccordé à une source d'alimentation et qui comporte:

une broche d'entrée d'initialisation raccordée à un circuit externe alimentant cette broche durant un cycle de réinitialisation qui démarre à chaque mise sous tension de ladite source d'alimentation;

une mémoire à accès aléatoire;

une mémoire morte munie d'un emplacement mémoire de vecteur d'initialisation adressé en premier à chacun des cycles d'initialisation; et

des broches de sorties raccordées séparément aux enroulements desdites électrovannes par l'intermédiaire d'amplificateurs de puissance, la non excitation simultanée des électrovannes correspondant au plus haut rapport de transmission; avec comme caractéristique le fait:

a) que chacun desdits amplificateurs de puissance comporte une fonction inverseuse, de sorte qu'un niveau haut à l'une desdites sorties correspond à la non excitation de l'électrovanne correspondante; et

b) que ledit emplacement mémoire de vecteur d'initialisation est chargé avec une adresse d'instruction correspondant au plus haut rapport de transmission,

de telle manière que lorsque la tension de la source d'alimentation atteint à nouveau la valeur minimum nécessaire pour le fonctionnement normal du microprocesseur, après toute chute au-dessous de ce minimum ayant imposé le plus haut rapport à ladite transmission, la commande maintient ce plus haut rapport, d'abord en raison de la remise normale au niveau haut des broches de sortie, et ensuite en raison de l'adressage du vecteur d'initialisation et jusqu'à la fin du calcul par le microprocesseur du rapport approprié.

De préférence, elle comporte aussi pour chaque électrovanne un circuit de contrôle d'alimentation de celle-ci dérivé sur une entrée du micro-calculateur pour y comparer la coïncidence logique du signal de sortie d'alimentation de l'électrovanne et du signal dudit circuit de contrôle.

De préférence, en outre, elle comporte un circuit de surveillance d'une sortie à signal périodique représentative du bon fonctionnement du microcalculateur, ledit circuit comprenant des moyens d'intégration et de comparaison de tension de sorte que sa sortie peut prendre deux états logiques selon la régularité ou non du signal périodique précité, la sortie de ce circuit de surveillance étant reliée à un point de chaque circuit de commande d'alimentation d'électrovanne intermédiaire entre la sortie correspondante du microcalculateur et l'amplificateur correspondant, de sorte que son état logique de défaut impose un état de l'amplificateur correspondant à la non-alimentation de chaque électrovanne.

D'autre part, la programmation interne du microcalculateur permet de contrôler les organes périphériques et, en particulier, le capteur de charge du moteur et le capteur de vitesse du véhicule.

Dans la même voie de la sécurité recherchée, l'invention vise à développer les moyens de prévenir le conducteur de toute anomalie détectée qui survient et d'en transmettre l'information d'identification à une prise de diagnostic aménagée sur le véhicule pouvant être utilisée par le réseau de dépannage après vente.

Ces particularités de l'invention et d'autres caractéristiques apparaîtront mieux dans la description suivante d'un mode de réalisation d'une telle commande électronique ci-après donnée, à titre d'exemple, et en référence au dessin annexé, dans lequel:

— la figure 1 est une vue schématique des circuits électroniques constitutifs de la commande selon l'invention;
— la figure 2 est un tableau des états logiques de deux des sorties du microcalculateur gouvernant l'alimentation des électrovannes et les rapports de vitesses en marche avant;
— la figure 3 est un tableau des états de diverses sorties du microcalculateur en réponse à diverse états détectés de la commande;
— la figure 4 est une vue schématique d'un boîtier de contrôle destiné à être raccordé à la prise de diagnostic et à la batterie du véhicule.

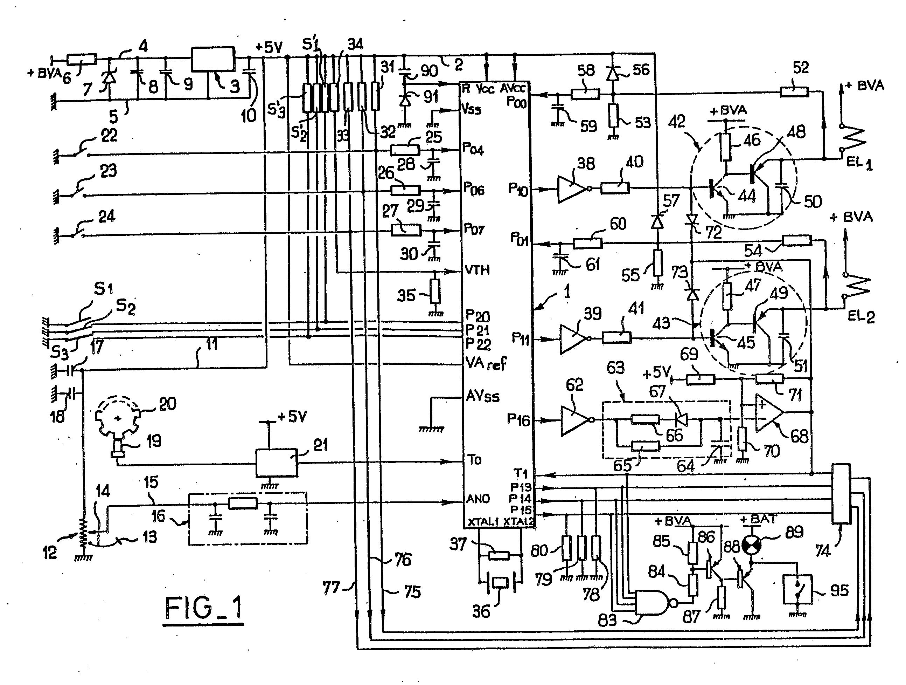

La commande électronique représentée à la figure 1 est agencée autour d'un microcalculateur désigné par 1 dans son ensemble, et qui est de préférence un microcalculateur INTEL de type 8022 en ce qu'il présente notamment l'avantage de renfermer un convertisseur analogique-numérique, d'emploi commode pour tenir compte du paramètre d'entrée qu'est le facteur charge du moteur et qui peut lui être amené sous forme d'une tension potentiométrique représentative du degré d'enfoncement de la pédale d'accélérateur par le conducteur. Il est rappelé à titre indicatif que ce microcalculateur est encapsulé dans un boîtier à quarante broches et peut intégrer notamment 64 octets en mémoire dynamique (RAM) et 2048 octets en mémoire morte (ROM). Il comporte vingt-huit lignes d'entrée-sortie dont deux entrées analogiques et deux sorties capables de délivrer à l'état haut un courant de 7 mA chacune, propre ici à permettre la commande d'électrovannes par l'intermédiaire d'amplificateurs à semiconducteurs. Ce microcalculateur, qui fonctionne entre 4,5 et 6,5V peut exécuter plus de soixante-dix instructions, et il comporte un compteur interne ainsi qu'une horloge avec son oscillateur.

Le microcalculateur 1 est alimenté par son entrée Vcc, ainsi que par son entrée AVcc correspondant à l'alimentation du convertisseur analogique-numérique interne, sous une tension de +5V établie sur un conducteur 2 par un régulateur de tension 3 alimenté par des conducteurs 4 et 5, respectivement soumis aux polarités positive +BVA et de masse indiquées du circuit d'alimentation de la commande de boîte automatique. Le microcalculateur est connecté à la masse par sa broche Vss. Sur le conducteur 4 est disposée une résistance de charge 6 et, en parallèle entre les conducteurs 4 et 5, sont disposés une diode Zener 7 de protection contre les surtensions et deux condensateurs 8 et 9 avant le régulateur 3 ainsi qu'un condensateur 10 à sa sortie, à titre de protection contre les parasites. Cette tension régulée alimente par l'intermédiaire du conducteur 11 un potentiomètre 12 constituant capteur de position angulaire de la pédale d'accélérateur 13, qui est liée au curseur 14 du potentiomètre, lequel est relié par le conducteur 15 et un filtre anti-parasites 16 à l'entrée ANO du microcalculateur. Deux condensateurs 17 et 18 dérivés du conducteur 11 assurent également une protection contre les parasites externes. Le potentiomètre 12 introduit ainsi le paramètre charge du moteur. Le paramètre vitesse du véhicule est introduit à l'aide d'un capteur de vitesse 19 qui peut être de type inductif ou électromagnétique et qui coopère ici avec la roue de verrouillage de parking 20 du véhicule et qui est suivi d'un circuit électronique 21 d'adaptation des signaux du capteur en impulsions appropriées à l'entrée TO du microcalculateur, dont le compteur sert à transformer ces impulsions en informations numériques représentatives de la vitesse du véhicule.

Des commandes volontaires de changement de rapport de transmission sont également prévues par l'intermédiaire de contacts électriques actionnables sélectivement tels que la rétrocontact 22 (contact de fin d'enfoncement de la pédale d'accélérateur usuellement dit de "kick down"), le contact 23 d'imposition du premier rapport de transmission ou 1ère vitesse, et le contact 24 d'interdiction du troisième rapport de transmission ou 3ème vitesse, ces contacts étant respectivement reliés aux entrées P04, P06 et P07 du microcalculateur par l'intermédiaire de filtres passe-bas composés des résistances 25, 26, 27 et des condensateurs 28, 29, 30 destinés à éviter les parasites éventuels ou l'effet des rebondissements inévitables des contacts de commande considérés.

En l'état d'ouverture des contacts 22, 23, 24, les entrées P04, P06, P07 sont normalement mises à l'état haut par la voie de résistances 31, 32, 33 les reliant au conducteur 2 de +5V. La commande volontaire est donnée par la fermeture sur la masse du contact choisi 22 ou 23 ou 24, ce qui a pour effet de placer l'entrée correspondante du microcalculateur à l'état bas.

Le microcalculateur comprend une entrée VTH à l'aide de laquelle est fixée la tension de référence de comparateurs à seuil internes notamment reliés aux entrées P04, P06 et P07; cette tension de référence étant ici fixée à environ 2,5V par les résistances 34, 35 formant un pont diviseur, de sorte que les dits comparateurs internes permettent d'éliminer les parasites usuellement présents au voisinage de la masse à board d'un véhicule. L'horloge du microcalculateur comprend un quartz externe 36 et une résistance 37 en parallèle branchés sur les entrées XTAL1 et XTAL2.

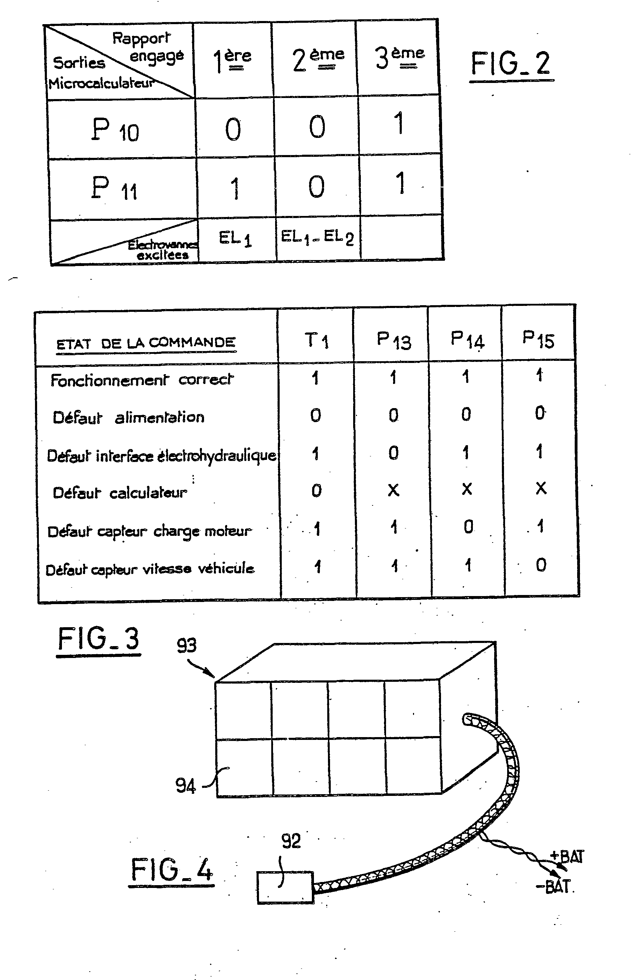

La fermeture de l'un des contacts 22, 23, 24 ou l'exploitation des données fournies par le capteur 12 de la charge du moteur et le capteur 19 de la vitesse du véhicule, ont pour effet, par l'intermédiaire d'une programmation de fonctionnement interne du microcalculateur faisant notamment référence à des lois de changement des rapports de vitesses en fonction de ces paramètres qui sont mises en mémoire dans le microcalculateur, de placer les deux sorties P10 et P11 du microcalculateur qui sont celles capables de délivrer à l'état haut un courant de 7 mA chacune, dans les états logiques haut ou bas dont les combinaisons indiquent à la figure 2 les alimentations sélectives correspondantes de deux électrovannes EL1 et EL2 et les rapports de marche avant correspondants.

La programmation interne de fonctionnement du microcalculateur et les lois mises en mémoire sont à voir comme étant du choix de l'homme de l'art, étant à noter cependant que le microcalculateur offre avantageusement, par exemple, la possibilité de sélectionner huit lois mises en mémoire à l'aide de trois entrées à codage binaire P20, P21, P22, auxquelles sont reliés trois circuits de sélection à contact S1, S2, S3 associés à des résistances S'1, S'2, S'3, pour mettre au choix les entrées P20, P21 et P22 à l'état haut ou bas. Comme il a été dit, ceci permet une adaptation aisée d'une telle commande électronique à divers véhicules ou aux demandes des usagers.

Les sorties P10 et P11 du microcalculateur sont reliées à des inverseurs 38, 39 dont les sorties sont reliées par des résistances 40, 41 à l'entrée d'interfaces de puissance constituées par des amplificateurs à semi-conducteurs désignés par 42, 43 dans leur ensemble. Ces amplificateurs comprennent chacun un transistor d'entrée NPN 44, 45, dont l'émetteur est relié à la masse et dont le collecteur est relié au pôle +BVA à travers une résistance de charge 46, 47 ainsi qu'à la base d'un transistor de puissance PNP 48, 49 dont le collecteur est relié à la masse et l'émetteur à une borne du bobinage de l'électrovanne EL1, EL2, dont l'autre borne est reliée au pôle +BVA. L'émetteur de chaque transistor de puissance 48, 49 est également relié à la masse à travers un condensateur de découplage 50, 51. Les sorties des amplificateurs 42, 43 sont en outre respectivement reliées aux entrées P00 et P01 du microcalculateur par l'intermédiaire de ponts diviseurs à résistances 52, 53 et 54, 55 permettant d'adapter les niveaux de tension entre les émetteurs des transistors de puissance 48, 49 et ces entrées P00 et P01. Des diodes 56, 57 assurent une protection de ces entrées en cas de surtension à la sortie des amplificateurs, notamment à la coupure du courant dans les électrovannes EL1, EL2. Entre chaque pont diviseur et l'entrée correspondante P00 ou P01 du microcalculateur est disposé un filtre passe-bas à résistance 58 et condensateur 59 pour l'entrée P00 et résistance 60 et condensateur 61 pour l'entrée P01, pour éliminer les parasites apparaissant à la sortie des amplificateurs 42, 43.

Pour une surveillance de bon fonctionnement propre du microcalculateur, celui-ci est amené à générer de manière connue par un sous-programme de surveillance utilisant son convertisseur analogique/numérique et ses mémoire internes, un signal rectangulaire sur sa sortie P16, qui est testé par un circuit de surveillance raccordé à cette dernière.

Ce circuit est ici constitué à l'aide d'un inverseur 62 relié à un générateur de rampe désigné par 63 dans son ensemble et comprenant un condensateur 64 destiné à être cycliquement chargé et déchargé par les voies suivantes:

— une voie de charge comprenant une résistance 65 autorisant une charge lente du condensateur 64 lorsque la sortie de l'inverseur 62 passe à l'état haut (sortie P16 à l'état bas);
— une voie de décharge rapide parallèle à la précédente et comportant une résistance 66 en série avec une diode 67 qui devient passante lorsque la sortie de l'inverseur 62 passe à l'état bas (sortie P16 à l'état haut).

La tension de charge du condensateur 64 est appliquée à l'entrée inverseuse d'un amplificateur opérationnel 68, à l'entrée non-inverseuse duquel est appliquée la tension intermédiaire d'un pont diviseur à résistances 69—70 intercalées entre le +5V régulé et la masse.

La sortie de l'amplificateur 68 est reliée par une résistance de réaction 71 à l'entrée non-inverseuse de cet amplificateur, afin de favoriser le croisement des tensions comparées au voisinage du point de comparaison.

La sortie de l'amplificateur 68 est reliée à l'entrée des amplificateurs 42, 43 par l'intermédiaire de deux diodes 72 et 73 de sens passant vesr la sortie de l'amplificateur et susceptibles de dériver vers cette dernière, selon son état, le signal normalement destiné à être amplifié.

La sortie de l'amplificateur 68 est également reliée à l'entrée T1 du microcalculateur dans un but que l'on verra plus loin, ainsi qu'à une prise de diagnostic 74, à laquelle sont aussi reliés des conducteurs 75, 76, 77 respectivement dérivés des liaisons des contacts à commande volontaire 22, 23, 24 avec les entrées P04, P06 et P07 du microcalculateur.

A cette prise de diagnostic 74 sont également reliées trois sorties P13, P14, P15 du micro-calculateur, destinées à fournir à la prise de diagnostic 74, en combinaison avec le signal de l'entrée T1, une information codée représentative de défauts détectés de la commande électronique et explicités dans le tableau de la figure 3. Ces sorties P13, P14, P15 sont respectivement reliées à la masse par l'intermédiaire de résistance 78, 79, 80, et elles sont au niveau haut en l'absence de défaut détecté les concernant.

L'entrée T1 et les trois sorties P13, P14, P15 sont également connectées aux quatre entrées d'un circuit NON-ET 83 dont la sortie est reliée à un pont diviseur à résistances 84, 85 relié au +BVA et assurant la polarisation de base d'un transistor PNP 86 dont le collecteur, relié à la masse à travers une résistance 87, est également relié à la base d'un transistor PNP 88, dans le circuit d'émetteur duquel est placé un voyant 89 équipant le tableau de bord du véhicule et qui est relié au plus Batterie +BAT du véhicule.

Le microcalculateur comporte une broche R de réinitialisation qui est reliée au conducteur 2 à travers un condensateur 90 et à la masse à travers une diode 91 de façon à répondre dans un délai très bref à toute baisse de la tension d'alimentation régulée de +5V et prévenir un fonctionnement impropre du microcalculateur en réini-tialisant celui-ci. Cette broche force toutes les sorties du microcalculateur à un niveau haut jusqu'à rétablissement de la tension normale de fonctionnement.

Par souci de sécurité pour les passagers du véhicule et la transmission de celui-ci, on notera d'abord en se référant au tableau de la figure 2, que lorsque les électrovannes EL1 et EL2 ne sont pas alimentées, la transmission du véhicule est mise sur le rapport le plus élevé, ce qui évite toute rétrogradation intempestive ou destructrice en cas de panne d'alimentation électrique générale ou de la boîte de vitesse automatique. Mais en outre, s'il advient que la tension d'alimentation du microcalculateur vienne à tomber à la broche R en dessous de sa valeur nécessaire au bon fonctionnement du microcalculateur (ici en dessous de 4,5V), il y a alors remise à zéro du programme et réinitialisation, avec mise au niveau haut des sorties P10, P11, ce qui correspond à un état de blocage des amplificateurs 42 et 43 compte tenu de la disposition des inverseurs 38, 39, et donc pratiquement à un non-passage de courant dans les électrovannes EL1 et EL2 (compte tenu que le passage de courant alors permis vers les entrées de contrôle P00 et P01 est à tenir comme négligeable), de sorte qu'en ce cas de défaillance la transmission du véhicule se trouve mise sur le troisième rapport si elle ne l'est déjà, ce qui évite toute rétrogradation intempestive ou destructrice possible.

Outre la relation de phase correspondante qui existe entre les sorties P10, P11 du micro-calculateur et celles des amplificateurs 42, 43, ainsi que l'adaptation tension-courant qui résulte de l'agencement décrit, cette réalisation des amplificateurs présente les avantages suivants:

— elle facilite le refroidissement des transistors de puissance car les deux collecteurs qui sont généralement reliés électriquement aux radiateurs des transistors peuvent être disposés sans précaution particulière sur le même dissipateur thermique qui peut être en contact avec la masse du véhicule;
— aucune diode n'est nécessaire en parallèle sur les électrovannes EL1 et EL2 pour assurer la protection des transistors 48, 49 car lorsque la coupure du courant dans l'électrovanne se produit, la surtension développée à ses bornes par effet selfique rend la jonction base/ émetteur conductrice et crée un courant émetteur/base à travers la résistance 46 ou 47 reliée au +BVA, qui rend le transistor conducteur tant que l'énergie de la self ne s'est pas dissipée.

De plus, les circuits de contrôle à ponts diviseurs 52, 53 et 54, 55 reliés aux entrées P00 et P01 du microcalculateur servent ici à permettre de comparer dans ce dernier la coïncidence logique entre le signal de sortie de P10 et P11 et le signal dérivé de la sortie des amplificateurs 42, 43 vers les entrées P00 et P01, et le microcalculateur est programmé pour qu'en l'absence de coïncidence il provoque le passage de la transmission sur le troisième rapport afin d'éviter tout inconvénient qui peut résulter d'un défaut de l'interface électro-hydraulique (amplificateur ou électrovanne notamment), lequel est signalé par la mise à zéro de la sortie P13.

Si le calculateur présente une défaillance de fonctionnement entraînant une mauvaise répétition des signaux périodiques précités sur sa sortie P16, voire leur absence complète, ceci a pour effet de faire se charger le condensateur 64 au-delà de la tension de référence appliquée à l'amplificateur opérationnel 68 par le pont diviseur 69—70, car le condensateur n'est plus déchargé par l'existence régulière des signaux de sortie en P16. Dans ce cas, au dépassement de la tension de référence précitée sur l'entrée inverseuse, la sortie de l'amplificateur 68 passe à l'état bas, ce dont il résulte:

— que l'application de cet état bas à l'entrée des amplificateurs 42, 43 via les diodes 72, 73 a pour effet d'en provoquer le blocage et d'imposer ainsi un état de non-excitation des électrovannes EL1 et EL2 faisant passer en toute sécurité la transmission du véhicule sur le troisième rapport;
— que l'application de cet état bas à l'entrée T1 du microcalculateur a aussi pour effet de l'amener de façon interne à imposer à ses sorties P10—P11 l'état correspondant au troisième rapport de transmission.

Dans un but de sécurité, la mesure de vitesse de type périodemètre s'effectue sur un tour de la roue de parking 20 avec validation de la mesure seulement à partir de 2,5 km/h. A la fin de chaque mesure de vitesse, le microcalculateur contrôle que la valeur de cette mesure de vitesse est supérieure à 2,5 km/h. Dans la négative il garde en mémoire la valeur de la mesure de vitesse précédemment prise en compte et maintient ainsi le rapport engagé. Cette disposition permet, en cas de disparition ou de brusque chute de la fréquence du signal issu du capteur de vitesse 19, d'éviter la rétrogradation brutale de un ou deux rapports de transmission. De plus, quand la commande se trouve sur le 2ème ou le 3ème rapport ou lors de la mise sous tension du microcalculateur, la détection d'une vitesse inférieure à 2,5 km/h entraîne la mise à zéro de la sortie P15. De ce fait, lors d'un premier démarrage et ce jusqu'à ce que le véhicule ait dépassé 2,5 km/h (contrôle voyant défaut) ou si le micro-calculateur détecte une rupture du capteur de vitesse sur le 2ème et le 3ème rapport, la sortie P15 est mise à zéro.

D'autre part, le microcalculateur teste le bon fonctionnement du capteur de charge. En cas de défaut, la commande électronique de l'automatisme continuera à fonctionner avec un pilotage charge moteur défectueux et ceci sans danger pour les occupants du véhicule ou la bonne tenue mécanique des éléments du groupe moteur-transmission. L'entrée VAref reçoit la tension limite supérieure et l'entrée AVss la tension limite inférieure du convertisseur analogique-numérique intégré dans le micro-calculateur. Ces tensions sont fixées respectivement à 5V et à 0V. La tension issue du curseur du potentiomètre de charge évolue en fonctionnement du pied levé ou pied à fond de l'accélérateur entre 0,2V et 4,8V. Ayant fixé les limits supérieure et inférieure du convertisseur à 5V et 0V, on dispose ainsi à chaque extrémité d'une plage morte de 0,2V qui permet de détecter un mauvais fonctionnement du potentiomètre, la plage 0V/0,2V servant à détecter une coupure des liaisons alimentation et curseur du potentiomètre et la plage 4,8V—5V une coupure de la liaison de masse du potentiomètre. La lecture de la tension issue du capteur de charge s'effectue en moyenne toutes les milli-secondes pour les besoins de la commande électronique. Lors de cette lecture, le microcalculateur vérifie que cette tension est bien comprise dans la plage 0,2V/4,8V sinon il met la sortie P14 à zéro signalant ainsi qu'un défaut est apparu sur le capteur de charge moteur.

L'application d'un seul état bas à l'entrée du circuit NON-ET 83 consécutif à l'apparition d'un des défauts cités ci-dessus entraîne la mise à l'état haut de sa sortie, le blocage du transistor 86 et la conduction du transistor 88 dans le circuit d'émetteur duquel est placé le voyant 89. L'allumage du voyant au tableau de bord avertit le conducteur qu'un défaut s'est produit sur la transmission et l'incite à se rendre chez son réparateur.

L'information codée d'un défaut est envoyée sur la prise diagnostic 74 suivant le tableau de la figure 3 qui se rapporte aux états détectés de la commande et au code logique qui en résulte sur les sorties T1, P13, P14 et P15, les croix de la ligne 4 signifiant que l'état des sorties considérées n'est pas pris en compte pour le défaut indiqué. Cette prise de diagnostic 74 est destinée à être raccordée à une prise correspondante 92 à sept conducteurs reliés à un boîtier de contrôle 93 à affichage lumineux des défauts, qui comporte en outre deux conducteurs d'alimentation destinés à être raccordés aux bornes de la batterie+BAT et −BAT du véhicule testé. Ce boîtier comporte un décodeur des informations codées présentes sur la prise de diagnostic 74, et huit fenêtres lumineuses 94 qui s'éclairent selon les défauts décodés que sont les cinq défauts des lignes 2 à 6 du tableau de la figure 3, plus les trois contrôles correspondant respectivement à la surveillance du fonctionnement des contacts 22, 23, 24 qui peut être testée par contrôle de tension.

L'alimentation du boîtier de contrôle 93 à partir de la batterie du véhicule est prévue pour pouvoir rendre compte du défaut d'alimentation par le conducteur +BVA ou le fusible correspondant.

On notera que le voyant de contrôle 89 peut également servir d'indicateur de carence d'huile de la transmission automatique en reliant un détecteur de niveau à contact 95 au point commun de l'émetteur du transistor 88 et du voyant 89, ce détecteur étant agencé pour établir l'équivalent d'un contact de masse en cas de manque d'huile, ce qui provoque alors l'allumage du voyant 89.

**Revendications**

1. Commande électronique des changements de rapport de vitesse d'une transmission automatique de véhicule automobile incluant des électrovannes (EL1, EL2) de commande des changements de rapport placées sous la dépendance de ladite commande électronique, cette dernière comprenant essentiellement un microprocesseur (1) qui est raccordé à une source d'alimentation (2) et qui comporte:

une broche d'entrée d'initialisation (R) raccordée à un circuit externe (90, 91) alimentant cette broche (R) durant un cycle de réinitialisation qui démarre à chaque mise sous tension de ladite source d'alimentation (2);

une mémoire à accès aléatoire;

une mémoire morte munie d'un emplacement mémoire de vecteur d'initialisation adressé en premier à chacun des cycles d'initialisation; et

des broches de sorties (P11, P10) raccordées séparément aux enroulements desdites électrovannes (EL1, EL2) par l'intermédiaire d'amplificateurs de puissance (38, 39), la non excitation simultanée des électrovannes correspondant au plus haut rapport de transmission; caractérisée par le fait:

a) que chacun desdits amplificateurs de puissance (38, 39) comporte une fonction inverseuse, de sorte qu'un niveau haut à l'une desdites sorties correspond à la non excitation de l'électrovanne correspondante (EL1, EL2); et

b) que ledit emplacement mémoire de vecteur d'initialisation est chargé avec une adresse d'instruction correspondant au plus haut rapport de transmission,

de telle manière que lorsque la tension de la source d'alimentation (2) atteint à nouveau la valeur minimum nécessaire pour le fonctionnement normal du microprocesseur (1), après toute chute au dessous de ce minimum ayant imposé le plus haut rapport à ladite transmission, la commande maintient ce plus haut rapport, d'abord en raison de la remise normale au niveau haut des broches de sortie (P11, P10), et ensuite en raison de l'adressage du vecteur d'initialisation et jusqu'à la fin du calcul par le microprocesseur (1) du rapport approprié.

2. Commande électronique selon la revendication 1, caractérisée en ce qu'elle comporte pour chaque électrovanne (EL1, EL2) un circuit de contrôle d'alimentation de celle-ci (52, 53, 56, 58, 59; 54, 55, 57, 60, 61) dérivé sur une entrée (P00, P01) du microcalculateur (1) pour y comparer la coïncidence logique du signal de sortie d'alimentation de l'électrovanne et du signal dudit circuit de contrôle.

3. Commande électronique selon l'une quelconque des revendications précédentes, caractérisée en ce qu'elle comporte un circuit de surveillance (62 à 73) d'une sortie à signal périodique (P16) représentative du bon fonctionnement du microcalculateur, ledit circuit comprenant des moyens d'intégration (64) et de comparaison (68) de tension de sortie que sa sortie peut prendre deux états logiques selon la régularité ou non du signal périodique précité, la sortie de ce circuit de surveillance étant reliée à un point de chaque circuit de commande d'alimentation d'électrovanne intermédiaire entre la sortie correspondante (P10, P11) du microcalculateur (1) et l'amplificateur (42, 43) correspondant, de sorte que son état logique de défaut impose un état de l'amplificateur (42, 43) correspondant à la non-alimentation de chaque électrovanne.

4. Commande électronique selon les revendications 1 à 3, caractérisée en ce que ladite sortie du circuit de surveillance et une sortie (T1) du microcalculateur (1) répondant à la ou aux comparaisons de coïncidence précitées sont reliées à une prise de diagnostic (74).

5. Commande électronique selon la revendication 4, caractérisée en ce que ladite sortie du circuit de surveillance et la sortie (T1) du microcalculateur (1) répondant à la ou aux comparaisons de coïncidence précitées sont reliées à un amplificateur (84 à 88) d'alimentation d'un voyant d'alarme (89) répondant à leur état logique de défaut par l'alimentation du voyant.

6. Commande électronique selon l'une quelconque des revendications précédentes, comprenant un capteur (19, 20) de vitesse du véhicule, caractérisée en ce que le microcalculateur (1) contrôle le fonctionnement du capteur de vitesse en comparant chaque mesure de vitesse à une valeur de vitesse faible de démarrage, et en gardant en mémoire toute valeur précédente supérieure à cette dernière, à l'effet de maintenir le rapport de transmission engagé en cas de défaillance du capteur de vitesse.

7. Commande électronique selon l'une quelconque des revendications précédentes, comprenant un capteur potentiométrique (12, 13, 14) de charge-moteur du véhicule, caractérisée en ce que le microcalculateur (1) compare la tension potentiométrique fournie par le capteur de charge à une plage de tension prédéterminée dans laquelle elle doit se trouver, à l'effet de prévenir de toute défaillance.

8. Commande électronique selon les revendications 4, 6 et 7, caractérisée en ce que le microcalculateur (1) comporte des sorties (P14, P15) de détection de défaut des capteurs de vitesse et de charge qui sont également reliées à la prise de diagnostic (74).

9. Commande électronique selon les revendications 5 à 8, caractérisée en ce que les sorties du circuit de surveillance, la sortie du microcalculateur répondant à la ou aux comparaisons de coïncidence précitées, et les sorties de détection de défaut des capteurs de vitesse et de charge sont reliées par l'intermédiaire d'un circuit logique commun (83) de type OU à l'amplificateur (84 à 88) d'alimentation du voyant d'alarme (89) précité.

10. Commande électronique selon les revendications 4 ou 8, comprenant des contacts (22, 23, 24) à commande volontaire de changement, d'imposition ou d'interdiction des rapports de transmission, caractérisée en ce que lesdits contacts sont reliés à des entrées correspondantes (P04, P06, P07) du microcalculateur ainsi qu'à la prise de diagnostic (74) permettant de les vérifier par contrôle de tension.

11. Commande électronique selon les revendications 4 et 8, caractérisée en ce qu'il est prévu un boîtier de contrôle (93) destiné à être raccordé à la prise de diagnostic (74) et comprenant un décodeur des états des diverses sorties de détection de défaut pour l'affichage sélectif lumineux (94) du ou des défauts éventuels détectés de la commande.

12. Commande électronique selon l'une quelconque des revendications précédentes, caractérisée en ce que le microcalculateur (1) comporte plusieurs entrées (P20, P21, P22) auxquelles sont reliées des circuits à contacts (51, 52, 53) de sélection par codage binaire de plusieurs lois de changement de rapport des vitesses mises en mémoire dans le microcalculateur.

**Patentansprüche**

1. Elektronische Steueranlage für ein automatisches Kraftfahrzeugwechselgetriebe mit in Abhängigkeit von der genannten

Steueranlage gesteuerten Magnetventilen (EL1, EL2) zur Steuerung der Veränderung des Drehzahlverhältnisses, wobei diese Steueranlage im wesentlichen einen Mikroprozessor (1) enthält, der an eine Betriebsstromversorgung (2) angeschlossen ist und umfaßt:

Einen Eingangskontakt (R) zur Initialisierung, der an einen äußeren Stromkreis (90, 91) angeschlossen ist, der diesen Kontakt (R) währen eines Wiederinitialisierungszyklus mit Strom versorgt, der jedesmal neu anläuft sobald die genannte Stromversorgungsquelle (2) unter Spannung gesetzt wird;

einen Speicher mit wahlfreiem Zugriff (RAM);

einen Festspeicher (ROM) mit einer Speicherstelle für einen Initialisierungsvektor, der bei jedem Initialisierungszyklus als erstes angesprochen wird, und

Ausgangskontakte (P11, P10), die über Leistungsverstärker (38, 39) gesondert an die Wicklungen der genannten Magnetventile (EL1, EL2) angeschlossen sind, wobei die gleichzeitige Nichterregung der Magnetventile dem höchsten Übersetzungsverhältnis enspricht; dadurch gekennzeichnet, daß

a) jeder der genannten Leistungsverstärker (38, 39) eine Umkehrfunktion enthält, so daß ein hochliegendes Signal an einem der genannten Ausgänge der Nichterregung des zugeordneten Magnetventils (EL1, EL2) entspricht; und

b) die genannte Speicherstelle für den Initialisierungsvektor mit einer Befehlsadresse geladen ist, die dem höchsten Übersetzungsverhältnis entspricht,

so daß die Steueranlage dieses höchste Übersetzungsverhältnis beibehält sobald die Spannung der Stromversorgungsquelle (2) wieder die zum normalen Betrieb des Mikroprozessors (1) erforderliche Mindesthöhe erreicht, nachdem ein Absinken unter dieses Minimum dieses höchste Übersetzungsverhältnis eingeschaltet hat, zuerst wegen des Wiedereintretens des normalen, hochliegenden Signals der Ausgangskontakte (P11, P10) und dann wegen des Ansprechens des Initialisierungsvektors, und bis zum Ende der Berechnung des richtigen Übersetzungsverhältnisses durch den Mikroprozessor (1) beibehält.

2. Elektronische Steueranlage gemäß Anspruch 1, dadurch gekennzeichnet, daß sie für jedes Magnetventil (EL1, EL2) einen Kontrollkreis für die Betriebsstromversorgung desselben (52, 53, 56, 58, 59; 54, 55, 57, 60, 61) enthält, der an einem Eingang (P00, P01) des Mikroprozessors (1) abgenommen wird, um die logische Übereinstimmung des Ausgangssignals für die Stromversorgung des Magnetventils und des Signals des genannten Kontrollkreises zu vergleichen.

3. Elektronische Stuervorrichtung gemäß einem beliebigen der vorstehenden Ansprüche, dadurch gekennzeichnet, daß sie einen Überwachungskreis (62 bis 73) eines Ausgangs mit einem periodischen Signal (P16) enthält, der das richtige Arbeiten des Mikroprozessors überwacht, wobei dieser genannten Kreis Integrationsmittel (64) und Vergleichsmittel (68) für die Spannung enthält, so daß sein Ausgang je nach Regelmäßigkeit des vorgenannten periodischen Signals bzw. Unregelmäßigkeit desselben zwei logische Zustände annehmen kann, wobei der Ausgang dieses Überwachungskreises jeweils an einem Punkt der Steuerkreise der Stromversorgung der Magnetventile zwischen dem entsprechenden Ausgang (P10, P11) des Mikroprozessors (1) zum entsprechenden Verstärker (42, 43) gelegt ist, so daß ein logischer Fehlerzustand einen Zustand des entsprechend Verstärkers (42, 43) erzwingt, der der Nichterregung jedes Magnetventils entspricht.

4. Elektronische Steuervorrichtung gemäß Anspruch 1 bis 3, dadurch gekennzeichnet, daß der genannten Überwachungskreis und ein Ausgang (T1) des Mikroprozessors (1), der auf den Vergleich bzw. die Vergleiche der Übereinstimmung der vorgenannten Zuständ anspricht, an eine Diagnosebuchse (74) angeschlossen sind.

5. Elektronischer Steuerkreis gemäß Anspruch 4, dadurch gekennzeichnet, daß der genannten Ausgang des Überwachungskreises und der Ausgang (T1) des Mikroprozessors (1), der auf den Vergleich bzw. die Vergleiche der vorgenannten Übereinstimmung anspricht, an einen Verstärker (84 bis 88) der Stromversorgung einer Warnanzeigevorrichtung (89) angeschlossen sind, die auf deren logischen Fehlerzustand mit der Versorgung der Anzeige anspricht.

6. Elektronische Steuervorrichtung gemäß einem beliebigen der vorstehenden Ansprüche, die einen Drehzahlgeber (19, 20) des Fahrzeugs enthält, dadurch gekennzeichnet, daß der Mikroprozessor (1) das Arbeiten des Drehzahlgebers überwacht indem er jede Drehzahlmessung mit einer niedrigen Anlaßdrehzahl vergleicht und alle vorangehenden Werte, die höher als diese sind, in einem Speicher speichert, um das einmal eingeschlatete Übersetzungsverhältnis bei Ausfall des Drehzahlgebers beizubehalten.

7. Elektronische Steuervorrichtung gemäß einem beliebigen der vorstehenden Ansprüche, mit einem Potentiometergeber (12, 13, 14) für die Motorbelastung des Fahrzeugs, dadurch gekennzeichnet, daß der Mikroprozessor (1) die vom Belastungsgeber gelieferte Potentiometerspannung mit einem vorgegebenen Spannungsbereich vergleicht, innerhalb dessen sie liegen muß, um jeden Ausfall auszuschließen.

8. Elektronische Steuervorrichtung gemäß den Ansprüchen 4, 6 und 7, dadurch gekennzeichnet, daß der Mikroprozessor (1) zwei Ausgänge (P14, P15) enthält, die den Ausfall des Drehzahlgebers und des Belastungsgebers feststellen und die ebenfalls die Diagnosebuchse (74) angeschlossen sind.

9. Elektronische Steuervorrichtung gemäß den Ansprüchen 5 bis 8, dadurch gekennzeichnet, daß die Ausgänge des Überwachungskreises, der Ausgang des Mikroprozessors (1), der auf den Vergleich bzw. die Vergleiche der vorgenannten Übereinstimmung anspricht, sowie die Ausgänge zur Feststellung des Ausfalls des Drehzahlgebers und des Belastungsgebers über einen gemeinsamen logischen ODER-Kreis (83) an den Verstärker (84 bis 88) zur Stromversorgung der vorgenannten Warnanzeige (89) angeschlossen sind.

10. Elektronische Steueranlage gemäß den Ansprüchen 4 oder 8, die beliebig zu schaltende Kontakte (22, 23, 24) zum Einschalten bzw. zum Ausschalten der Übersetzungsverhältnisse enthält, dadurch gekennzeichnet, daß die genannten Kontakte an die entsprechenden Eingänge (P04, P06, P07) des Mikroprozessors sowie an die Diagnosebuchse (74) gelegt sind, die die Nachprüfung durch Überwachung der Spannung ermöglichen.

11. Elektronische Steueranlage gemäß den Ansprüchen 4 und 8, dadurch gekennzeichnet, daß ein Kontrollgerät (93) vorgesehen ist, das an die Diagnosebuchse (74) angeschlossen wird und eine Dekodiervorrichtung für die verschiedenen Fehler-Ausgangszustände zwecks wahlweiser Leuchtanzeige (94) des bzw. der ggf. festgestellten Fehler der Steuerung enthält.

12. Elektronische Steuervorrichtung gemäß einem beliebigen der vorstehenden Ansprüche, dadurch gekennzeichnet, daß der Mikroprozessor (1) mehrere Eingänge (P20, P21, P22) enthält, an die die wahlweise schaltbaren Kontaktstromkreise (S1, S2, S3) gelegt sind, die in binärer Kodierung mehrere Änderungsgesetze für das Drehzahlverhältnis in den Speicher des Mikroprozessors einspeichern.

**Claims**

1. Electronic control of the gear ratio changes of an automatic automobile vehicle transmission including electrovalves (EL1, EL2) for the control of ratio changes placed under the control of the said electronic control, this latter essentially comprising a microprocessor (1) which is connected to a power supply source (2) and which includes:

an initialization input pin (R) connected to an external circuit (90, 91) feeding that pin (R) during a reinitialization cycle which starts up each time the said power supply source (2) is put under power;

a random access memory;

a read only memory having an initialization vector memory location addressed first in each of the initialization cycles; and

output pins (P11, P10) separately connected to the windings of the said electrovalves (EL1, EL2) via power amplifiers (38, 39), the simultaneous non-excitation of the electrovalves corresponding to the highest transmission ratio; characterized in that:

a) each of the said power amplifiers (38, 39) has an inverting function, such that a high level on one of the said outputs corresponds with the non-excitation of the corresponding electrovalve (EL1, EL2); and

b) the said initialization vector memory location is loaded with an instruction address corresponding to the highest transmission ratio,

such that when the voltage of the power supply source (2) again reaches the minimum value necessary for the normal functioning of the microprocessor (1), after any fall below this minimum having imposed the highest ratio on the said transmission, the control maintains this highest ratio, first because of the normal returning to the high level of the output pins (P11, P10), and then because of the addressing of the initialization vector and up to the end of the calculation by the microprocessor (1) of the appropriate ratio.

2. Electronic control according to Claim 1, characterized in that it includes for each electrovalve (EL1, EL2) a circuit for checking the power supply of that electrovalve (52, 53, 56, 58, 59; 54, 55, 57, 60, 61) connected to an input (P00, P01) of the microcomputer (1) in order to compare therein the logical coincidence of the output signal of the electrovalve power supply and the signal from the said check circuit.

3. Electronic control according to any of the previous claims, characterized in that it includes a monitoring circuit (62 to 73) for a periodic signal output (P16) representing the correct functioning of the micro-computer, the said circuit including means of integration (64) and of comparison (68) of voltage such that its output can take two logic states according to the regularity or otherwise of the previously mentioned periodic signal, the output of this monitoring circuit being connected to a point in each electrovalve power supply control circuit between the corresponding output (P10, P11) of the micro-computer (1) and the corresponding amplifier (42, 43), such that its default logic state imposes a state of the amplifier (42, 43) corresponding to the non-supply of power to each electrovalve.

4. Electronic control according to Claims 1 to 3, characterized in that the said output of the monitoring circuit and an output (T1) of the micro-computer (1) responding to the previously mentioned comparison(s) of coincidence are connected to a diagnostic socket (74).

5. Electronic control according to Claim 4, characterized in that the said output of the monitoring circuit and the output (T1) of the micro-computer (1) responding to the previously mentioned comparison(s) of coincidence are connected to an amplifier (84 to 88) for the supply of power to an alarm indicator (89) responding to their default logic state by supplying power to the indicator.

6. Electronic control according to any of the previous claims, including a vehicle speed sensor (19, 20), characterized in that the micro-computer (1) checks the functioning of the speed sensor by comparing each speed measurement with a low startup speed, and retaining in memory any previous value greater than the latter, for the purpose of maintaining the engaged transmission ratio in the case of failure of the speed sensor.

7. Electronic control according to any of the previous claims, including a potentiometric sensor (12, 13, 14) of vehicle engine load, characterized in that the micro-computer (1) compares the potentiometric voltage supplied by the load sensor with a predetermined voltage range in which it must be located, for the purpose of preventing any failure.

8. Electronic control according to Claims 4, 6 and 7, characterized in that the micro-computer (1) includes outputs (P14, P15) for the fault detection of the speed and load sensors which are also connected to the diagnostic socket (74).

9. Electronic control according to Claims 5 to 8, characterized in that the outputs of the monitoring circuit, the output of the micro-computer responding to the comparison(s) of coincidence previously mentioned, and the outputs for the fault detection of the speed and load sensors are connected via a common logic circuit (83) of OR type to an amplifier (84 to 88) for the supply of power to the previously mentioned alarm indicator (89).

10. Electronic control according to Claims 4 or 8, including contacts (22, 23, 24) for the voluntary control of the changing, imposition or prohibition of transmission ratios, characterized in that the said contacts are connected to corresponding inputs (P04, P06, P07) of the micro-computer as well as to the diagnostic socket (74) enabling them to be verified by voltage checking.

11. Electronic control according to Claims 4 and 8, characterized in that there is provided a monitoring unit (93) intended to be connected to the diagnostic socket (74) and including a decoder of the various fault detection output states for the selective luminous display (94) of possible detected faults in the control.

12. Electronic control according to any of the previous claims, characterized in that the micro-computer (1) includes several inputs (P20, P21, P22) to which are connected circuits with contacts (S1, S2, S3) for selection by binary coding of several gear ratio change laws entered into memory in the micro-computer.

FIG_1

0 037 557

| Sorties Microcalculateur \ Rapport engagé | 1ère | 2ème | 3ème |
|---|---|---|---|
| P 10 | 0 | 0 | 1 |
| P 11 | 1 | 0 | 1 |
| Électrovannes excitées | EL$_1$ | EL$_1$- EL$_2$ | |

FIG_2

| ETAT DE LA COMMANDE | T$_1$ | P$_{13}$ | P$_{14}$ | P$_{15}$ |
|---|---|---|---|---|
| Fonctionnement correct | 1 | 1 | 1 | 1 |
| Défaut alimentation | 0 | 0 | 0 | 0 |
| Défaut interface électrohydraulique | 1 | 0 | 1 | 1 |
| Défaut calculateur | 0 | X | X | X |
| Défaut capteur charge moteur | 1 | 1 | 0 | 1 |
| Défaut capteur vitesse véhicule | 1 | 1 | 1 | 0 |

FIG_3

93

94

FIG_4

92

+BAT
−BAT.

2